# EUROPÄISCHE PATENTSCHRIFT

(11) **EP 0 564 964 B1**
(45) Veröffentlichungstag und Bekanntmachung des Hinweises auf die Patenterteilung: **04.12.1996**
(21) Anmeldenummer: 93105284.9
(22) Anmeldetag: 30.03.1993
(51) Int. Cl.: A62D 3/00, F23G 5/08

(54) **Verfahren zur Giftstoffvernichtung, die bei der Beseitigung organischer Müllbestandteile anfallen**
Process for the destruction of toxicants produced during the elimination of organic waste
Procédé pour la destruction des substances toxiques produites pendant l'élimination des dechets organiques

(30) Priorität: 06.04.1992 DE 4211513
(43) Veröffentlichungstag der Anmeldung: 13.10.1993
(73) Patentinhaber: THERMOSELECT AKTIENGESELLSCHAFT, FL-9490 Vaduz (LI)
(72) Erfinder: Kiss, Günter H., MC-98004 Monaco (MC)
(74) Vertreter: Pfenning, Meinig & Partner

(56) Entgegenhaltungen:
- EP-A- 0 469 737
- CH-A- 656 636
- DE-A- 3 206 785
- US-A- 4 695 448
- US-A- 5 179 903
- RESEARCH DISCLOSURE Nr. 301, Mai 1989, NEW YORK, US Seite 30124 'Partial oxidation units for pcb elimination'

## Beschreibung

Die Erfindung bezieht sich auf ein Verfahren zur Gittstoffvernichtung durch irreversible Stoffzersetzung gemäß Oberbegriff von Anspruch 1.

Bei dem Verfahren nach der CH 656 636 zum Umwandeln von Abfallstoffen, die thermisch zersetzbare, chemische Substanzen enthalten, in Endprodukte, wie CO₂, CO, H₂O und dergleichen, werden die Abfallstoffe einem heißen Plasmagas ausgesetzt, dergestalt, daß in der Reaktionszone ein derartiges Sauerstoffpotential eingehalten wird, daß die Zerfallprodukte kontinuierlich in die genannten Endprodukte umgewandelt werden können. Die Abfallstoffe werden hier durch eine zumindest auf 2000° C erhitzte Reaktionszone geleitet, welche aus einer Aushöhlung in einer gasdurchlässigen, stückigen Füllung einer Reaktorkammer besteht, und zwar einer Füllung aus wenigstens teilweise kohlenstoffhaltigem Material. Die Zeitspanne, während welcher bei dem bekannten Verfahren die Reaktanten in der Reaktionszone verbleiben, beträgt nur einige Millisekunden, während die Zeitspanne, in welcher die Füllstoffe in der restlichen Füllung der Reaktorkammer verweilen, zwischen 1 bis 5 Sekunden liegt. Soweit die Abfallstoffe in gasförmigem Zustand vorliegen, werden sie vollständig oder teilweise mit dem Plasmagas vermischt, ansonsten werden sie in fester Form bzw. in Form einer Flüssigkeit mittels eines Trägergases in die Reaktionszone des Reaktors eingebracht. Bei diesem bekannten Verfahren ist die Reaktorkammer in einen herkömmlichen Koksofenschacht angeordnet, in welchem über eine Hochofengicht stückiges kohlenstoffhaltiges Material etwa in Form von Koks oder dergleichen zugeführt wird, wobei darauf geachtet wird, daß innerhalb der gesamten Reaktorkammer ein im wesentlichen konstanter Gasaufstrom für die unteren Brennergase erreicht wird, um eine gleichmäßige thermische Bedingung für die Gesamtheit der Reaktionsvorgänge vorgeben zu können. Die zu vernichtenden Abfallstoffe werden mittels Zuführungspressen über den Boden der Reaktorkammer in diese eingeführt, wobei in einer Vorheizzone Temperaturen von etwa 1370° C vorgegeben werden. Die Abfallstoffe werden anschließend durch eine zumindest auf 2000° C erhitzte Reaktionszone geleitet, wobei der Plasmalichtbogen auf die kohlenstoffhaltige gasdurchlässige Füllung der Reaktorkammer gerichtet ist.

Bei diesem bekannten Verfahren werden insofern zwar vorteilhafte thermodynamische Verhältnisse bezüglich der Reaktionszone und der darüber angeordneten gasdurchlässigen stückigen Füllung als Verweil- und Stabilisierungszone geschaffen, es ist jedoch nachteilig, daß hierfür ein Koksofen erforderlich ist, der mit zusätzlichem Koks, Dolomit, Steinkohle oder dergleichen betrieben werden muß. Das Plasmagas wird zwar zusammen mit den Abfallstoffen und/oder ihren Zerfallsprodukten in gasförmiger oder flüssiger Form in einer Vorratskammer unter starker Turbulenzbildung gemischt, tritt nachfolgend aber durch eine Brennerdüse aus, bei der nicht sichergestellt ist, daß die Gesamtheit der Giftstoffe den hohen Plasmatemperaturen von über 2000 °C ausgesetzt werden.

Der vorliegenden Erfindung liegt die Aufgabe zugrunde, von einem derartigen Stand der Technik ausgehend, ein Verfahren zu schaffen, das ohne zusätzlichen Bedarf an Fremdkohlenstoffträgern eine thermische Giftstoff-Abfallbeseitigung ermöglicht, wobei in Gegenwart einer überschüssigen Menge an Sauerstoff die anfallenden Giftstoffe derart in stabile Verbrennungsprodukte umgewandelt werden sollen, daß keine merkliche Belastung der Umwelt bei wirtschaftlicher Verfahrensführung zu befürchten ist.

Die Lösung dieser Aufgabe wird erfindungsgemäß durch das im Patentanspruch angegebene Verfahren erreicht.

Dadurch, daß der Stabilisierungsbereich im Hochtemperaturreaktor oberhalb der Brennzone durch die kohlenstoffhaltigen Restbestandteile des thermisch geeignet aufbereiteten Mülls selbst und nur durch diese vorgegeben wird, wobei diese Bestandteile in stückiger bzw. brockiger, gasdurchlässiger Form vorliegen, ist bei kontinuierlicher Einspeisung in den Reaktor auf jegliche kohlenstoffhaltigen Fremdenergiequellen wie Koksschüttungen verzichtet worden. Die im Standardhausmüll vorhandenen organischen Bestandteile reichen vollständig aus, um bei entsprechender thermischer Vorbehandlung ausreichend kohlenstoffhaltige Reaktorfüllungen vorzugeben, in denen eine relativ lange Verweilzeit für die in der Flammentemperatur unschädlich gemachten Giftstoffkomponenten zur Verhinderung von Neosynthesen sichergestellt wird. Jegliche toxischen Abfallstoffkomponenten der verschiedensten Industrie- und Kommunalabfallstoffe können so hundertprozentig zerstört werden. Im Ergebnis der geregelten Verbrennung zerfallen diese toxischen oder anderweitig umweltschädlichen Abfallkomponenten bzw. Molekülstrukturen in unschädliche Endprodukte, wobei der Verfahrensablauf irreversibel ist. Auch Kohlenwasserstoffe von hohem Chlorierungsgrad und andere beliebige halogenierte Molekülkomponenten zerfallen bei den hohen Brennertemperaturen von über 2000° C und die Zerfallsprodukte stabilisieren sich bei einer Verweilzeit von wenigstens 5 Sekunden im Stabilisierungsbereich, in dem Temperaturen von wenigstens 1400° C vorherrschen. Die über die gasdurchlässige` brockige Reaktorfüllung nach ausreichender Verveilzeit den Hochtemperaturreaktor verlassenden unschädlichen Zerfallsprodukte werden von den ca. 1400° C schockartig auf vorzugsweise unter 100° C abgekühlt, so daß auch hier eine De-Novo-Synthese der Gaskomponenten mit Sicherheit vermieden ist.

Die Giftstoffe in Form der stabilen Molekülstrukturen aus der thermischen Vorbehandlung werden mit einem die Verbrennung beschleunigenden und die Flammentemperatur erhöhenden Brenngas, wie zum Beispiel Acetylen, gemischt, wodurch die Flammentemperatur des Brenners zusätzlich erhöht wird.

Der Brennerkopf ist ein Kombinationsbrenner, der so ausgebildet ist, daß die anfallenden gasförmigen oder flüssigen Giftstoffe bzw. das Giftstoffgasgemisch durch eine mittlere zentrale Öffnung, die von einer Mehrzahl von Sauerstoffdüsen umgeben ist, zentral in das Innere der Brennerflamme gegeben werden kann. Die eigentliche Brennerflamme aus einem äußeren Düsenring aus Gas-/Sauerstoffdüsen besteht, wird die Gesamtheit der Giftstoffe durch den Hochtemperaturflammenbereich gezwungen, bevor sie in unschädlich aufgespaltene Molekülstrukturen zerlegt in den Stabilisierungsbereich eintreten können, so daß die erforderliche Irreversiblität des Hochtemperaturzerfalls gewährleistet ist.

## Patentansprüche

1. Verfahren zur Zerstörung flüssiger und/oder gasförmiger Giftstoffe mit relativ stabilen Molekülstrukturen durch thermische Zersetzung in einem Schachtreaktor bei Temperaturen von mindestens
2.000°C unter stöchiometrischem Sauerstoffbeschuß und anschließender Schockkühlung der stabilen gasförmigen Reaktionsprodukte,
**gekennzeichnet** durch
- die ausschließliche Verwendung von kohlenstoffhaltigen Müllbestandteilen, die durch eine thermische Vorbehandlung stückig bzw. brockig-gasdurchlässig aufbereitet sind, als durchströmbare Schüttung im Schachtreaktor, der in seinem unteren Bereich eine Brennzone enthält, in der eine Mindesttemperatur von 2.000°C durch Sauerstoffzufuhr aufrecht erhalten wird,
- durch die Zufuhr der zu zersetzenden Giftstoffe zu dieser Brennzone unter Verwendung mindestens eines Kombinationsbrenners, der mit Sauerstoff und einem Brenngas betrieben wird, und bei dem die Giftstoffe zentral durch eine Ringflamme geleitet werden,
- und durch die Verwendung eines Schachtreaktors, dessen oberer Schachtbereich als Stabilisierungszone ausgebildet ist und daß eine Verweilzeit der Vergasungsprodukte der Schüttung und der Zersetzungsprodukte der Giftstoffe nach dein Durchströmen der Reaktorschüttung von mindestens 5 sec ermöglicht wird, bei einer Temperatur der Stabilisierungszone von mehr als 1 400°C, ehe die gasförmigen Reaktionsprodukte zur Vermeidung einer Neubildung von Schadstoffen schockgekühlt werden.

## Claims

1. Process for the destruction of liquid and/or gaseous toxins having relatively stable molecular structures by thermal decomposition in a shaft reactor at temperatures of at least 2000°C with a stoichiometric excess of oxygen and subsequent shock-cooling of the stable gaseous reaction products, characterized by
- the exclusive use of carbon-containing refuse constituents which have been processed by a thermal pretreatment so as to be gas-permeable in lump form or in piece form as a bed, through which gas can flow, in the shaft reactor which contains, in its lower region, a combustion zone in which a minimum temperature of 2000°C is maintained by oxygen feed,
- by feeding the toxins to be decomposed to this combustion zone, using at least one combination burner, which is operated with oxygen and a fuel gas, and in which the toxins are passed centrally through a ring flame,
- and by using a shaft reactor, whose upper shaft region is constructed as a stabilizing zone and in that a residence time of the gasifying products of the bed and of the decomposition products of the toxins of at least 5 sec is permitted after flowing through the reactor bed, at a temperature of the stabilizing zone of above 1400°C, before the gaseous reaction products are shock-cooled to avoid reformation of pollutants.

## Revendications

1. Procédé de destruction de substances toxiques liquides et/ou gazeuses à structures moléculaires relativement stables par décomposition thermique dans un réacteur à cuve et ce, à une température de 2000 °C minimum, par injection stoechiométrique d'oxygène suivie d'un refroidissement de choc des produits de réaction gazeux stables, caractérisé par
- l'utilisation exclusive de composants de déchets contenant du carbone sous la forme de blocs et/ou de mottes perméables au gaz et conditionnés au préalable par un traitement thermique, puis entassés dans le réacteur en vrac de façon à permettre au gaz de traverser les déchets, ledit réacteur comprenant, dans sa partie inférieure, une zone de combustion dans laquelle la température de 2000 °C minimum est maintenue par injection d'oxygène ;
- l'alimentation de cette zone de combustion en substances toxiques à décomposer, avec utilisation d'au moins un brûleur combiné alimenté par de l'oxygène et par un gaz combustible, les substances toxiques étant dirigées de façon à passer par le centre d'une flamme annulaire ;
- et l'utilisation d'un réacteur à cuve dont la zone supérieure est réalisée sous la forme d'une zone de stabilisation et en ce qu'un temps d'arrêt de 5 secondes minimum des produits de gazéification des déchets et des produits de décomposition des substances toxiques peut être maintenu après passage des déchets dans le réacteur et ce, à une température supérieure à 1400 °C dans la zone de stabilisation, avant de soumettre les produits gazeux de réaction au refroidissement de choc pour éviter toute reproduction de produits toxiques.
